Europäisches Patentamt

European Patent Office

Office européen des brevets

(11) Numéro de publication: **0 520 376 A1**

# DEMANDE DE BREVET EUROPEEN

(21) Numéro de dépôt: **92110568.0**

(22) Date de dépôt: **23.06.92**

(51) Int. Cl.5: **B01L 3/02**, G01F 11/10

(30) Priorité: **28.06.91 FR 9108075**

(43) Date de publication de la demande:
**30.12.92 Bulletin 92/53**

(84) Etats contractants désignés:
**AT BE CH DE DK ES FR GB GR IT LI LU NL PT SE**

(71) Demandeur: **Guigan, Jean**
**5, rue des Ursulines**
**F-75005 Paris(FR)**

(72) Inventeur: **Guigan, Jean**
**5, rue des Ursulines**
**F-75005 Paris(FR)**

(74) Mandataire: **Weinmiller, Jürgen**
**Lennéstrasse 9 Postfach 24**
**W-8133 Feldafing(DE)**

(54) **Dispositif pour prélever et restituer une quantité prédéterminée et constante d'un liquide.**

(57) Le domaine de l'invention est celui des dispositifs permettant de prélever et de restituer une quantité prédéterminée et constante d'un liquide.

Selon l'invention, le dispositif pour prélever et restituer une quantité prédéterminée et constante d'un liquide est du type comprenant un tube destiné à contenir ladite quantité prédéterminée de liquide, ledit tube comprenant une extrémité ouverte d'admission-restitution dudit liquide, ledit tube (10) étant fermé à son extrémité (15) opposée à ladite extrémité (16) ouverte d'admission-restitution dudit liquide, le volume intérieur dudit tube (10) correspondant à ladite quantité prédéterminée, ledit tube (10) étant entraîné en rotation autour d'un axe (11) par des moyens d'entraînement, ledit tube étant disposé suivant une surface dont la distance, depuis ladite extrémité (15) fermée jusqu'à ladite extrémité (16) ouverte, augmente ou reste constante par rapport audit axe (11) de telle sorte qu'il se remplit entièrement du liquide (21) dans lequel est plongée ladite extrémité (16) ouverte lorsque lesdits moyens d'entraînement entraînent ledit tube (10) dans un sens et qu'il se vide entièrement du liquide (21) qu'il contient lorsque lesdits moyens d'entraînement entraînent ledit tube (10) dans le sens opposé.

FIG.1

Le domaine de l'invention est celui des dispositifs permettant de prélever et de restituer une quantité prédéterminée et constante d'un liquide.

Dans les analyses de laboratoire, il est souvent nécessaire de mettre dans un récipient une quantité prédéterminée d'une substance liquide, telle que du sérum ou un réactif. Pour cela on utilise couramment une pipette graduée à l'aide de laquelle on prélève par aspiration une certaine quantité de liquide ; puis on restitue la quantité de liquide prédéterminée par pression.

Cependant lorsque la dose à délivrer est très faible, cette méthode présente l'inconvénient d'être imprécise.

En effet, une telle pipette permet de prélever des quantités de liquide de l'ordre de 25 microlitres, à 5% près. Une telle quantité constitue une importante imprécision notamment dans le cas où le liquide à prélever est un réactif destiné à faire réagir une autre substance à des fins d'analyse, par exemple du sérum. On cherche effectivement à diminuer le plus possible ces quantités de réactif pour réaliser des économies, vu le coût élevé de certains réactifs.

Le document de brevet américain n° 4.874.114 décrit une pipette pour délivrer une dose prédéterminée et constante d'un liquide constituée par une demi-sphère creuse fixée à l'extrémité d'une tige. La demi-sphère définit un volume correspondant à une certaine quantité de liquide à prélever.

Le remplissage du volume par un liquide est réalisé en entraînant à grande vitesse, à l'aide de la tige, la pipette en rotation autour d'un axe. La vitesse de rotation est telle que l'on obtient des forces centrifuges suffisantes, pour un liquide de viscosité donné, pour remplir entièrement le volume précédemment défini. Le maintien de la demi-sphère dans une certaine position par rapport à la verticale permet de la remplir de liquide lorsque le mouvement de rotation est appliqué. Ce liquide est éjecté de la sphère lorsque la demi-sphère prend une autre position par rapport à la verticale et lorsque le même mouvement de rotation est appliqué.

Ce dispositif permet de délivrer une dose de l'ordre de 5 microlitres d'un liquide à plus ou moins 0,3% près.

Le principal inconvénient de ce dispositif est qu'il présente un certain encombrement puisque la demi-sphère doit pouvoir tourner autour d'un axe avec un angle de l'ordre de 3 degrés de part et d'autre d'un axe vertical. Il n'est donc pas possible de prélever (et de délivrer) une quantité prédéterminée de liquide dans un récipient ayant un accès présentant un faible débattement, par exemple, un tube à essais.

La présente invention a notamment pour objectif de pallier cet inconvénient.

Plus précisément, un des objectifs de l'invention est de fournir un dispositif pour prélever et restituer une quantité prédéterminée et constante d'un liquide pouvant être utilisé pour des récipients ayant des ouvertures d'accès de tailles réduites.

Cet objectif, ainsi que d'autres qui apparaîtront par la suite, est atteint grâce à un dispositif pour prélever et restituer une quantité prédéterminée et constante d'un liquide, du type comprenant un tube destiné à contenir ladite quantité prédéterminée de liquide, ledit tube comprenant une extrémité ouverte d'admission-restitution dudit liquide, ledit tube étant fermé à son extrémité opposée à ladite extrémité ouverte d'admission-restitution dudit liquide, le volume intérieur dudit tube correspondant à ladite quantité prédéterminée, ledit tube étant entraîné en rotation autour d'un axe par des moyens d'entraînement, ledit tube étant disposé suivant une surface dont la distance, depuis ladite extrémité fermée jusqu'à ladite extrémité ouverte, augmente ou reste constante par rapport audit axe de telle sorte qu'il se remplit entièrement du liquide dans lequel est plongée ladite extrémité ouverte lorsque lesdits moyens d'entraînement entraînent ledit tube dans un sens et qu'il se vide entièrement du liquide qu'il contient lorsque lesdits moyens d'entraînement entraînent ledit tube dans le sens opposé.

Préférentiellement, ledit tube est de forme hélicoïdale.

Avantageusement, ladite surface est de forme conique.

Avantageusement, ledit tube est enroulé autour d'un cylindre central et/ou noyé dans un matériau formant un cylindre extérieur, ledit cylindre support et/ou ledit cylindre extérieur étant entraîné en rotation par lesdits moyens d'entraînement.

Selon un mode de réalisation préférentiel, ledit cylindre est accouplé auxdits moyens d'entraînement par un système de montage et démontage rapide.

Avantageusement, lesdits moyens d'entraînement entraînent ledit tube à une vitesse comprise entre 10.000 et 20.000 tours par minute.

D'autres caractéristiques et avantages de l'invention apparaîtront à la lecture de la description suivante d'un mode de réalisation préférentiel, donné à titre explicatif et non limitatif, et des dessins annexés dans lesquels :

- la figure 1 représente une pipette selon un mode de réalisation de l'invention ;
- les figures 2, 3 et 4 représentent les trois phases successives de prélèvement et de restitution d'un liquide à l'aide d'une pipette constituant un autre mode de réalisation de l'invention ;
- la figure 5 représente un mode d'utilisation préférentiel de la pipette selon l'invention ;
- les figures 6, 7 et 8 représentent des vues d'un mode de solidarisation de la pipette à des moyens d'entraînement.

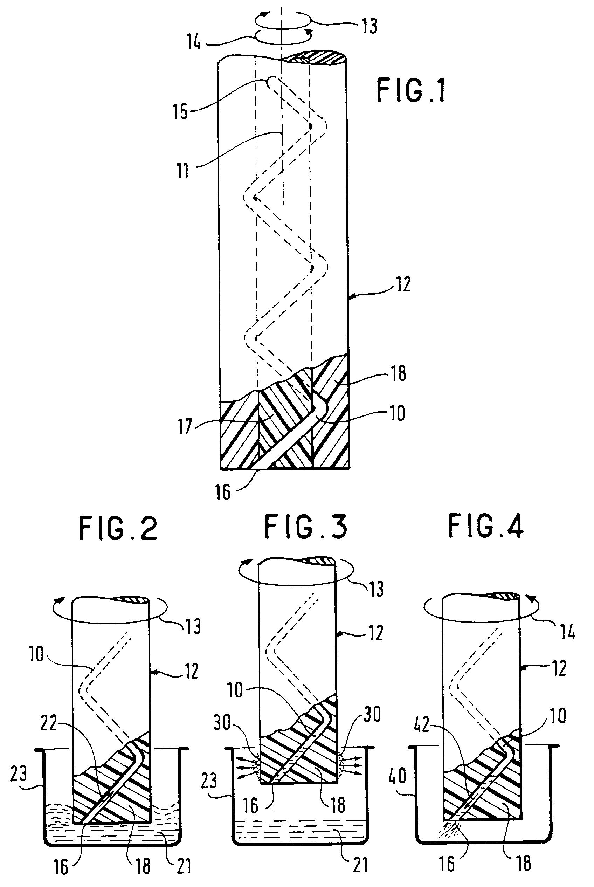

La figure 1 représente une pipette selon un mode de réalisation de l'invention.

Le dispositif de l'invention est constitué par un tube 10 creux, par exemple en forme d'hélice. L'axe central de symétrie du tube 10 est noté 11. Le tube 10 de forme hélicoïdale présente une extrémité supérieure 15 fermée et une extrémité inférieure 16 d'admission-restitution de liquide ouverte.

Lorsque l'extrémité inférieure 16 du tube 10 est plongée dans un liquide dont on veut prélever une certaine quantité, une petite quantité de ce liquide entre dans le tube 10 par capillarité. La mise en rotation du tube 10 selon un sens 13 applique au liquide entrant dans le tube 10 une composante de force centrifuge faisant monter le liquide dans le tube 10.

Le vidage du tube 1O est également assuré selon l'invention par la force centrifuge appliquée au liquide présent dans le tube 10. Cette force centrifuge permet l'extraction du liquide et est obtenue par rotation du tube 10 selon un sens 14 opposé au sens 13.

Les rotations du tube sont assurées par des moyens d'entraînement non représentés sur cette figure.

Selon un premier mode de réalisation, le tube 10 est enroulé autour d'un cylindre 17 central plein, par exemple en matière plastique. La fixation du tube 10 autour du cylindre 17 peut être réalisée de différentes manières, par exemple par collage.

Selon un mode de réalisation complémentaire, le cylindre 17 et le tube 19 sont noyés dans un matériau 18, par exemple également en matière plastique, de telle sorte que ce matériau 18 constitue un cylindre externe 12.

Selon un autre mode de réalisation, on effectue un surmoulage du tube 10 par un matériau constituant le cylindre externe, comme représenté dans les figures 2, 3 et 4.

Le tube 10 est par exemple en verre ou en métal inoxydable et son volume intérieur est de l'ordre de quelques microlitres. L'extrémité inférieure 16 du tube 10 présente avantageusement une section circulaire dans le plan de la base du cylindre 12.

La figure 2 montre comment un prélèvement d'une quantité déterminée de liquide peut être effectué à l'aide de la présente invention.

La pipette représentée est constituée d'un tube 10 surmoulé par un matériau 18 formant un cylindre 12 extérieur.

Dans un premier temps, l'extrémité 16 ouverte du tube 10 est plongée dans un liquide 21 dont on veut prélever une certaine quantité. Le liquide 21 est compris dans un récipient 23. La profondeur de pénétration de l'extrémité 16 du tube 10 dans le liquide 21 dépend notamment de la nature du liquide 21, de sa tension superficielle et de sa fluidité.

Ce prélèvement est effectué en activant les moyens d'entraînement de telle sorte que le cylindre 12 tourne autour de son axe central 11 (fig.1) selon un sens 13.

Lorsque ce mouvement de rotation est effectué à vitesse élevée, le liquide 21 monte dans le tube 1O du fait de la force centrifuge appliquée, comme représenté par la flèche 22. Le tube 10 se remplit entièrement du liquide 21 et l'air compris dans le tube 10 est d'abord comprimé vers l'extrémité supérieure 15 du tube 10, puis dilué avec le liquide sous pression avant de s'évacuer par l'ouverture 16.

La vitesse de rotation du cylindre 12 est de préférence égale à 15.000 tours par minute. Une telle vitesse de rotation permet de remplir de liquide 21 le tube 10 en quelques dixièmes de seconde.

Dans un second temps, l'extrémité inférieure 16 du tube 10 est extraite du liquide 21, tout en continuant de tourner selon le sens 13, comme représenté en figure 3.

Les gouttelettes 30 restant en contact avec la surface extérieure du cylindre 12 grâce à leur tension superficielle sont arrachées du cylindre 12 par la force centrifuge résultant de la rotation du cylindre 12. Cette opération permet de prélever uniquement une quantité donnée de liquide comprise dans le tube 10.

Dans un troisième temps, le liquide compris dans le tube 10 est évacué de ce tube vers un autre récipient 40, comme représenté en figure 4. Ce récipient, de même que le récipient 23, est par exemple constitué par un tube à essais. La restitution du liquide est effectuée en activant les moyens d'entraînement en rotation de telle sorte que le cylindre 12 tourne en sens inverse 14. Ce sens de rotation 14 permet d'appliquer au liquide compris dans le tube 10 une force centrifuge chassant le liquide hors du tube 10 par l'extrémité 16 selon une direction 42.

Au bout de quelques dixièmes de secondes, le tube 10 ne contient plus du tout de liquide et le récipient 40 contient un volume de liquide égal à celui prélevé par le tube 10 dans le récipient 23, à environ 0,3% près.

En effet, pour des vitesses de rotation de l'ordre de 15.000 tours par minute, la centrifugation est telle qu'aucune particule de liquide ne reste dans le tube 10 ou sur la surface extérieure du cylindre 12. La présente invention permet donc de prélever et de restituer une quantité de liquide constante sans contamination ultérieure. Il n'est donc pas nécessaire de stériliser le dispositif de l'invention après s'en être servi pour éviter une contamination extérieure.

De plus, le dispositif de l'invention permet de délivrer des quantités de liquide très petites, de l'ordre de quelques microlitres, suivant le volume intérieur du tube 10.

Le diamètre intérieur du tube 1O et son encombrement en hauteur dépendent du volume de liquide à prélever.

Le diamètre du cylindre 12 renfermant le tube 10 est de l'ordre de 5 mm. Cet encombrement réduit permet de prélever un liquide et de le restituer dans des récipients présentant un accès de taille réduite, par exemple dans des tubes à essais. Le fait de confiner le tube 10 dans un autre matériau permet de le protéger contre des chocs. Cela est particulièrement important si le tube 10 est en verre.

Un autre avantage de l'invention est qu'elle permet un dosage de liquide à 0,3% près, c'est-à-dire qu'elle peut avantageusement être utilisée pour le dosage de réactifs. Les très faibles quantités de liquide prélevées permettent d'effectuer des économies très importantes sur le réactif. En effet, lors d'analyses médicales, les réactions à observer peuvent se faire avec des quantités de réactif très réduites si l'on peut exactement doser ces quantités.

Il est à noter que pour changer le sens de rotation du dispositif selon l'invention, il est nécessaire de passer par une position d'arrêt. Dans cette situation le liquide compris dans le tube 10 ne s'écoule pas vu le faible diamètre de l'extrémité ouverte du tube.

Le tube 10 n'est pas nécessairement de forme hélicoïdale. Il suffit qu'il soit sur toute sa longueur à distance de l'axe de rotation, cette distance pouvant augmenter dans le sens extrémité fermée 15 extrémité ouverte 16. L'essentiel est donc que par rapport à l'axe de rotation, depuis l'extrémité fermée 15 jusqu'à l'extrémité ouverte 16, la distance augmente ou reste constante.

Une distance qui augmente correspond à une fixation du tube 10 sur une surface conique, alors qu'une distance constante correspond à un cylindre.

Le cylindre 12 comprenant le tube 10 constitue un moyen d'entraînement du tube 10 et est solidarisable provisoirement avec des moyens mécaniques d'entraînement.

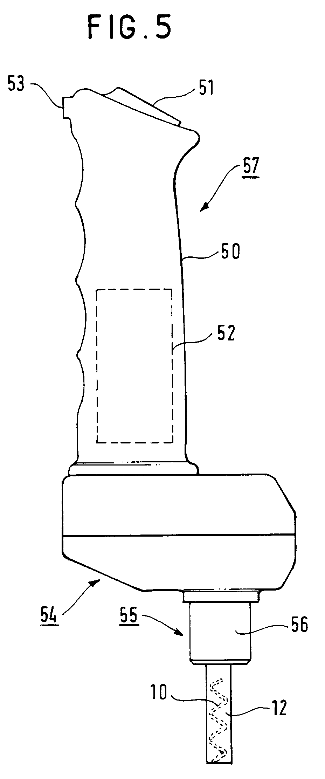

La figure 5 représente un mode d'application avantageux du dispositif de l'invention.

Le tube 10, par exemple compris dans un cylindre 12, est fixé par un dispositif 55 à mandrin coopérant avec une couronne 56 à un dispositif 57. Le dispositif 57 comprend une poignée 50 ergonomique, un moteur 52 et un système de transmission du mouvement de rotation du moteur 52 au cylindre 12 compris dans un boîtier 54 fixé à la base de la poignée 50. Le sens de rotation du moteur 52, et donc du cylindre 12 renfermant le tube 10, est commandé par un commutateur à 3 positions placé sur la partie supérieure de la poignée 50. Ce commutateur 51 permet de faire tourner le moteur 52 à droite, à gauche, et de l'arrêter.

Le moteur 52 peut être du type électrique ou pneumatique. Un moteur pneumatique présente l'avantage d'être moins contraignant à l'utilisation. Dans ce cas, la poignée 50 possède une entrée 53 d'air sous pression. Ce mode de réalisation suppose cependant la présence d'une source d'air comprimé. Dans le cas d'un moteur électrique, il faut prévoir un emplacement pour des piles ou des accumulateurs mais le dispositif peut alors être utilisé sans aucun autre appareillage. Une utilisation embarquée est alors possible.

Le cylindre 12 comprenant le tube 10 constitue une pièce interchangeable. Avantageusement, le volume du tube 10 est différent d'un pièce à l'autre, de telle sorte qu'il est possible de prélever et de restituer différentes quantités de liquide suivant la pièce utilisée.

Afin de permettre une interchangeabilité aisée des pièces, les moyens de solidarisation de la pièce aux moyens d'entraînement sont par exemple du type BILZ ou à cliquets.

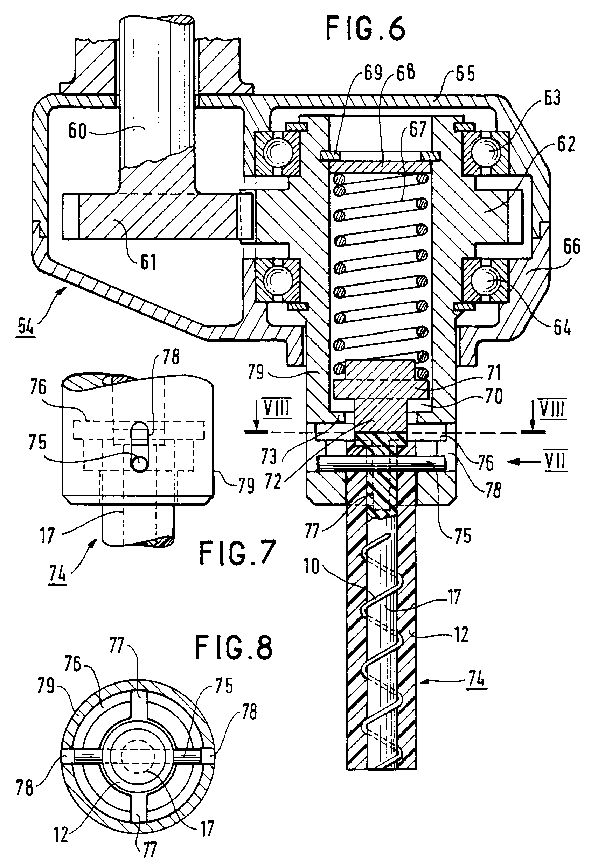

Un mode de fixation rapide d'une pièce aux moyens d'entraînement est représenté figure 6.

La figure 6 représente un mode de réalisation des moyens de solidarisation d'une pipette selon l'invention aux moyens d'entraînement.

Un arbre moteur 60 couplé au moteur 52 de la figure 5 est entraîné en rotation selon un sens défini par la position du commutateur 51. Le sens de rotation permettant de prélever une quantité de liquide dépend du sens du pas du tube 10 hélicoïdal. L'arbre moteur 60 entraîne une roue dentée 61 coopérant avec une autre roue dentée 62 positionnée entre des roulements à bille 63, 64 fixés chacun sur une moitié de capot extérieur 65, 66 rapportés de façon à constituer un boîtier. La roue dentée 62 est constituée par la partie supérieure d'un manchon 79 creux comprenant un ressort à boudin 67 dont l'extrémité supérieure est fixée ou appliquée contre une rondelle 68 maintenue par un anneau élastique 69.

L'extrémité inférieure du ressort 67 repose sur une pièce métallique 70 circulaire dont la partie supérieure comporte un cylindre de centrage et de maintien du ressort 67. La partie centrale 71 de la pièce 70 a un diamètre supérieur à celui présenté par un décrochement 73 du manchon.

En position basse, c'est-à-dire lorsqu'il n'y a pas de pipette engagée dans les moyens d'entraînement, la surface inférieure de la partie centrale 71 vient en appui contre la face supérieure du décrochement 73. La partie inférieure 72 de la pièce 70 pénètre dans un orifice délimité par le décrochement 73 et vient en appui contre la surface supérieure de la pipette 74 lorsqu'une telle pipette est engagée dans le dispositif d'entraînement en rotation. La pipette 74 est par exemple constituée d'un cylindre 17 central autour duquel le tube 10 est enroulé, et moulée dans un cylindre 12 extérieur, comme représenté à la figure 1. Bien entendu, ce mode de réalisation n'est pas limitatif et la pipette peut également être constituée par le tube 10 seul, son couplage avec les moyens d'entraînement en rotation étant alors assuré d'une manière adéquate.

Sur la figure 6, la partie 72 inférieure de la pièce 70 vient en appui contre la surface supérieure du cylindre 17 autour duquel est enroulé le tube 10.

La solidarisation de la pipette 74 aux moyens d'entraînement en rotation est assurée par un mécanisme qui sera mieux compris en référence à la figure 7.

La figure 7 représente les moyens de couplage de la pipette 74 aux moyens d'entraînement. Cette figure correspond à une coupe selon un axe VII-VII vue de droite.

La partie supérieure de la pipette 74 est traversée de part en part par un cylindre 75 en saillie par rapport au cylindre formé par la pipette 74. Le cylindre 75 a une longueur inférieure au diamètre d'une découpe 76 réalisée dans la partie inférieure du manchon. La découpe 76 est de forme circulaire et comporte en son milieu un orifice de passage de la partie supérieure de la pipette 74.

Lors de l'introduction de la pipette 74 dans les moyens d'entraînement, le cylindre 75 est engagé dans une rainure 77 ménagée dans la partie inférieure du manchon. La partie supérieure de la pipette 75 comprime le ressort 68. Il suffit alors de tourner manuellement la pipette 74 de 90 degrés pour que le cylindre 75 s'engage, lorsqu'on relâche la pipette 74, dans une fente 78 oblongue. Le cylindre 75 vient alors en butée sur la partie inférieure de la fente 78. La rotation du manchon permet alors d'appliquer un moment de rotation à la pipette 74.

La figure 8 représente une coupe selon VIII-VIII du dispositif d'entraînement dans lequel est engagée une pipette.

Le manchon comporte deux rainures 77 dans lesquels s'engagent les extrémités du cylindre 75. Une rotation de 90° degrés de la pipette 74 amène ces extrémités en face de deux fentes oblongues 78 où elles pénètrent par l'action du ressort 67.

Ce mode de fixation permet de changer rapidement de pipette, sans avoir à fournir d'effort important. Un ressort de 100 grammes de pression est suffisant pour assurer le maintien de la pipette.

La longueur de la pipette dépassant des moyens d'entraînement est préférentiellement assez courte, de l'ordre de quelques centimètres, afin d'éviter un battement de l'extrémité inférieure de la pipette dû à l'importante vitesse de rotation.

La pression à laquelle est soumis le liquide pour entrer et sortir du tube 10 est importante, ce qui garantit à la fois une grande précision du volume de liquide compris dans le tube 1O, et une absence d'impuretés sur les parois intérieures du tube 10 et sur les parois extérieures du tube si celui-ci n'est pas enrobé d'un matériau constituant un cylindre extérieur.

Par rapport à la pipette de l'état de la technique précité, la présente invention permet de prélever des quantités prédéterminées et constantes de liquide dans des récipients ayant des ouvertures d'accès de taille réduite.

Bien entendu, le tube 10 n'a pas forcément la forme d'une hélice présentant une révolution complète, et peut également avoir la forme d'une hélice tronquée, suivant le volume de liquide à prélever. La taille et le pas de l'hélice sont à optimiser pour chaque quantité de liquide à prélever.

## Revendications

1. Dispositif pour prélever et restituer une quantité prédéterminée et constante d'un liquide, du type comprenant un tube destiné à contenir ladite quantité prédéterminée de liquide, ledit tube comprenant une extrémité ouverte d'admission-restitution dudit liquide, caractérisé en ce que ledit tube (10) est fermé à son extrémité (15) opposée à ladite extrémité (16) ouverte d'admission-restitution dudit liquide, le volume intérieur dudit tube (10) correspondant à ladite quantité prédéterminée, ledit tube (10) étant entraîné en rotation autour d'un axe (11) par des moyens d'entraînement, ledit tube étant disposé suivant une surface dont la distance, depuis ladite extrémité (15) fermée jusqu'à ladite extrémité (16) ouverte, augmente ou reste constante par rapport audit axe (11) de telle sorte qu'il se remplit entièrement du liquide (21) dans lequel est plongée ladite extrémité (16) ouverte lorsque lesdits moyens d'entraînement entraînent ledit tube (10) dans un sens et qu'il se vide entièrement du liquide (21) qu'il contient lorsque lesdits moyens d'entraînement entraînent ledit tube (10) dans le sens opposé.

2. Dispositif selon la revendication 1, caractérisé en ce que ledit tube (10) est de forme hélicoïdale.

3. Dispositif selon l'une des revendications 1 et 2, caractérisé en ce que ladite surface est de forme conique.

4. Dispositif selon l'une des revendications 1 à 3, caractérisé en ce que ledit tube (10) est enroulé autour d'un cylindre (17) support et/ou noyé dans un matériau (18) formant un cylindre (12) extérieur, ledit cylindre (17) support et/ou ledit cylindre (12) extérieur étant entraîné en rotation par lesdits moyens d'entraînement.

5. Dispositif selon l'une des revendications 1 à 4, caractérisé en ce que ledit cylindre (12;17) est accouplé auxdits moyens d'entraînement par un système (55) de montage et démontage rapide.

6. Dispositif selon l'une des revendications 1 à 5, caractérisé en ce que lesdits moyens d'entraînement entraînent ledit tube (10) à une vitesse comprise entre 10.000 et 20.000 tours par minute.

FIG.1

FIG.2    FIG.3    FIG.4

# FIG.5

# FIG.6

69 68 65
63
62
60
67
66
61
54
64
79
71
70
VIII
VIII
73
VII
72
78
76
76
78
75
77
75
78
17
10
79
74
17
FIG.7
12
74

# FIG.8

77
76
75
79
78
78
12
17
77

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 316 698 (GUIGAN) <br> * colonne 4, ligne 12 - ligne 48; figures 4-6 * | 1 | B01L3/02 <br> G01F11/10 |
| D | & FR-A-2 623 283 <br><br> --- | | |
| A | DE-A-3 218 467 (EPPENDRF GERÄTEBAU NETHELER) <br> * abrégé * <br> * page 20, alinéa 2; figures 1-5 * <br><br> --- | 1 | |
| A | US-A-3 363 468 (BLADES) <br> * colonne 1, ligne 23 - ligne 35 * <br> * colonne 3, ligne 3 - ligne 17; figures 1,2 * <br><br> ----- | 1,6 | |

**DOMAINES TECHNIQUES RECHERCHES (Int. Cl.5)**

B01L
G01F
G01N

Le présent rapport a été établi pour toutes les revendications

| Lieu de la recherche | Date d'achèvement de la recherche | Examinateur |
|---|---|---|
| LA HAYE | 08 OCTOBRE 1992 | MILLS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)